# EUROPÄISCHE PATENTSCHRIFT

(11) **EP 2 307 648 B1**
(45) Veröffentlichungstag und Bekanntmachung des Hinweises auf die Patenterteilung: **08.06.2016**
(21) Anmeldenummer: 09759767.8
(22) Anmeldetag: 03.08.2009
(51) Int. Cl.: E05B 77/04, E05B 77/34, E05B 81/20, H02K 5/10, H02K 5/24, H02K 7/08, H02K 7/116, E05B 15/04, E05F 15/603, E05F 15/611, E05F 15/632, E05F 15/665, E05F 15/697

(54) **ANTRIEBSEINHEIT FÜR EIN KRAFTFAHRZEUG-AGGREGAT**
DRIVE COMPONENT FOR A MOTOR VEHICLE UNIT
UNITÉ D ENTRAÎNEMENT POUR UN GROUPE DE VÉHICULE AUTOMOBILE

(30) Priorität: 25.07.2008 DE 202008010051 U
(43) Veröffentlichungstag der Anmeldung: 13.04.2011
(73) Patentinhaber: Kiekert Aktiengesellschaft, 42579 Heiligenhaus (DE)
(72) Erfinder: BENDEL, Thorsten, 46149 Oberhausen (DE); TÖPFER, Claus, 71063 Sindelfingen (DE)
(74) Vertreter: Nunnenkamp, Jörg
(86) Internationale Anmeldenummer: PCT/IB2009/007036
(87) Internationale Veröffentlichungsnummer: WO 2010/010471

(56) Entgegenhaltungen:
- EP-A1- 1 886 852
- WO-A1-01/54252
- WO-A1-2005/116375
- WO-A2-02/075759
- DE-A1-102004 017 300
- DE-U1-202005 004 545

## Beschreibung

Die Erfindung betrifft eine Antriebseinheit für ein Kraftfahrzeug-Aggregat, insbesondere ein Kraftfahrzeugtür-Aggregat, vorzugsweise für eine Zuzieh-/Öffnungseinrichtung in oder an einem Kraftfahrzeugtürschloss, mit wenigstens einem Motor und zumindest einem gummielastischen Lager zur Festlegung des Motors an einer Basis, wobei das Lager im Axialschnitt und/oder Radialschnitt zumindest teilweise ziehharmonikaartig ausgebildet ist und in Axialrichtung und/oder Radialrichtung unterschiedliche Federkonstanten aufweist.

Bei dem Motor handelt es sich im Allgemeinen um einen Elektromotor. Als von dem Motor bzw. Elektromotor beaufschlagbare Kraftfahrzeug-Aggregate kommen beispielsweise Spiegel, Sitze, Lenksäulen, Fenster usw. in Frage. Besonders bevorzugt werden Kraftfahrzeugtür-Aggregate mit Hilfe des Motors bzw. Elektromotors angetrieben und betätigt. Hierbei handelt es sich um den beispielhaft bereits angesprochenen Außenspiegel oder auch andere in oder an der Kraftfahrzeugtür angebrachte und mit Hilfe des Motors zu verstellende Elemente. Ganz besonders bevorzugt wird der Motor bzw. Elektromotor zur Betätigung bzw. Beaufschlagung einer Zuzieh-/Öffnungseinrichtung in oder an einem Kraftfahrzeugtürschloss eingesetzt.

In diesem Zusammenhang ist die fragliche Antriebseinheit üblicherweise als externe Antriebseinheit ausgebildet, arbeitet also regelmäßig über einen Bowdenzug oder ein anderes Verbindungsmittel auf die demgegenüber örtlich getrennt angeordnete Zuzieh-/Öffnungseinrichtung. Eine solche Zuzieh-/Öffnungseinrichtung dient im Allgemeinen dazu, die Kraftfahrzeugtür von beispielsweise einer Vorschließstellung in eine Hauptschließstellung motorisch zu überführen. Dadurch reicht es aus, wenn ein Bediener die fragliche Kraftfahrzeugtür lediglich in die Vorschließstellung bzw. Vorraststellung verbringt. Die Einnahme der Hauptschließstellung bzw. Hauptraststellung erfolgt im Anschluss hieran automatisch und mit Hilfe des Motors der externen Antriebseinheit.

Daneben sind grundsätzlich auch motorisch beaufschlagte Öffnungseinrichtungen für das Kraftfahrzeugtürschloss bekannt. Diese sorgen dafür, dass die Kraftfahrzeugtür motorisch ausgestellt wird. Solche Zuzieh-/Öffnungseinrichtungen kommen überwiegend bei hochpreisigen Automobilen zum Einsatz und dienen primär der Komfortverbesserung. Auch Sicherheitsaspekte spielen zunehmend eine Rolle. Denn bei einem Kraftfahrzeug mit beispielsweise Zuziehhilfe ist immer gewährleistet, dass sich die zugehörige Kraftfahrzeugtür im Fahrbetrieb in ihrer Hauptschließstellung bzw. Hauptraststellung befindet, in welcher die Kraftfahrzeuginsassen mit maximaler Sicherheit geschützt sind. Ein Beispiel für eine solche Zuzieh-/Öffnungseinrichtung wird in der DE 199 38 378 C2 vorgestellt. Gegenstand der DE 100 48 051 A1 ist eine Zuziehhilfe.

Ferner kennt man Zuziehhilfen aus der Praxis, die wie allgemein üblich innerhalb der Kraftfahrzeugtür angebracht werden. Dabei stellt sich zunehmend das Problem, von dem Motor bzw. Elektromotor zwangsläufig verursachte Geräusche vom Innenraum zu entkoppeln bzw. einen möglichst geräuscharmen Betrieb der Zuzieh-/Öffnungseinrichtung zu gewährleisten. Hier wird in der Praxis bereits auf entkoppelte Gewindestücke oder Schaumstoffunterlagen bei der Anbringung des Motors zurückgegriffen.

Ähnlich geht die DE 101 31 590 A1 vor, die eine einfache Montage des Motors mittels Befestigungshaken bei gleichzeitiger Entkopplung durch Gummi-Dämpfungselemente realisiert. Zu diesem Zweck wird der Elektromotor in einem im Wesentlichen topfförmigen Aufnahmegehäuse mit einer Aufnahmeöffnung platziert. Das Aufnahmegehäuse ist mit mindestens einem federelastischen Halteelement ausgerüstet, das ein thermoplastisches Elastomer beinhaltet. Der bekannte Motor wird allerdings zum Antrieb eines Gebläses und nicht einer Zuzieh-/Öffnungseinrichtung eingesetzt.

Dennoch besteht unverändert die Gefahr, dass durch den körperlichen Kontakt des Motors mit der Karosserie über zugehörige Befestigungselemente Gerausche des Motors, beispielsweise per Körperschall in die Kraftfahrzeugtür, ein Kraftfahrzeugtürmodul und damit in den Innenraum gelangen und als besonders störend empfunden werden.

Im gattungsbildenden Stand der Technik nach der WO 01/54252 A1 wird ein Gebläsemotor für Heizungsanlagen von Kraftfahrzeugen beschrieben. Der Gebläsemotor ist in einem Gehäusetopf mit einem Befestigungsflansch untergebracht. Zwischen dem Gebläsemotor und einem Befestigungsbereich sind Dämpfungselemente angeordnet. Bei dem Dämpfungselement kann es sich auch um einen elastisch nachgiebigen Bereich am Befestigungsflansch handeln, welcher in Umfangsrichtung und/oder in axialer und radialer Richtung wirkt.

Die Fig. 12 und 13 zeigen hierzu eine Variante des Befestigungsflansches, der in einem Bereich als Dämpfungselement ausgebildet ist, indem dieser Bereich in radialer Richtung gewellt oder gefaltet ist. Dadurch ist dieser Bereich gegenüber Belastungen in radialer und axialer Richtung nachgiebiger. Außerdem wird eine Nachgiebigkeit in Umfangsrichtung beobachtet. - Die Gefahr von Körperschallübertragung ist hierdurch jedoch nicht bzw. nicht vollständig gebannt.

Der Erfindung liegt das technische Problem zugrunde, eine derartige Antriebseinheit für ein Kraftfahrzeug-Aggregat so weiter zu entwickeln, dass eine einwandfreie und montagetechnisch einfach aufgebaute Lagerung des Motors zur Verfügung gestellt wird und zugleich die Akustik eine deutliche Verbesserung erfährt.

Zur Lösung dieser technischen Problemstellung ist eine gattungsgemäße Antriebseinheit für ein Kraftfahrzeug-Aggregat im Rahmen der Erfindung dadurch gekennzeichnet, dass das Lager hohlzylindrisch sowie sich konisch verjüngend vom Anschlussfuß zum Anschlusskopf ausgestaltet ist, wobei das Lager in senkrechter Projektion auf die Basis mit seinem Anschlusskopf seitlich neben dem Motor angeordnet ist

Erfindungsgemäß verfügt das Lager im Axialschnitt und/oder Radialschnitt zumindest teilweise über einen ziehharmonikaartigen Aufbau. Dabei wird die erste Federkonstante zur elastischen strukturellen Verformung durch einen Ziehharmonikaabschnitt des Lagers und die zweite größere Federkonstante durch eine gummielastische intramolekulare Verformung des Lagermaterials zur Verfügung gestellt.

Das heißt, das erfindungsgemäße Lager, mit dessen Hilfe der Motor an die Basis angeschlossen ist, verfügt über die erste (relativ kleine) Federkonstante und die zweite (demgegenüber größere) Federkonstante. Dabei wird die erste Federkonstante durch den ziehharmonikaartigen Aufbau des Lagers bzw. einen an dieser Stelle realisierten Ziehharmonikaabschnitt zur Verfügung gestellt. Auf das Lager einwirkende Kräfte führen bei diesem Ziehharmonikaabschnitt dazu, dass sich dieser elastisch und strukturell verformt, also seine äußere Gestalt - ähnlich einer Feder - ändert. Im einfachsten Fall wird der Ziehharmonikaabschnitt bei auftretenden Kräften entweder gestaucht oder gedehnt. Dadurch treten in dem Material zur Herstellung des Lagers, dem Lagermaterial, zunächst keine oder nur geringfügige intramolekulare Verformungen auf. Vielmehr wird der Ziehharmonikaabschnitt wie eine Schraubenfeder gedehnt oder gestaucht.

Hierzu korrespondiert eine relativ geringe Federkonstante, die insbesondere in der Lage ist, hohe Frequenzen wirkungsvoll akustisch zu dämpfen. Solche hohen Frequenzen werden üblicherweise als Folge von Drehbewegungen des Motors respektive Elektromotors beobachtet. Denn bei derartigen Motoren handelt es sich um schnell laufende Elektromotoren, deren Drehbewegung in der Regel vielfach untersetzt wird, um die nötigen Kräfte zur Beaufschlagung des gewünschten Aggregates, vorzugsweise der Zuzieh-/Öffnungseinrichtung ausgangsseitig zur Verfügung stellen zu können. Die mit solchen schnellen Drehbewegungen einhergehenden Geräusche und insbesondere Vibrationen werden nun vorteilhaft erfindungsgemäß überwiegend von dem Ziehharmonikaabschnitt bzw. durch die erste (geringe) Federkonstante des Lagers akustisch gedämpft. Das heißt, eine etwaige Körperschallübertragung vom Motor auf die Basis, die z.B. durch Schlaglöcher, bei starker Beschleunigung oder beim Zuschlagen der Türen entstehen kann, findet praktisch nicht statt.

Die zweite größere Federkonstante des Lagers kommt überwiegend dann zum Einsatz, wenn der Motor beispielsweise bei einem Unfall abgebremst werden soll und das Lager "auf Block" fährt. Hiermit ist gemeint, dass der Ziehharmonikaabschnitt vollständig gestaucht wird und am Motor angreifende (zusätzliche) Kräfte durch die bekannte gummielastische intramolekulare Verformung des Lagermaterials mit im Vergleich zum Ziehharmonikaabschnitt größerer Federkonstante aufgenommen werden. Auf diese Weise erklären sich die unterschiedlichen Federkonstanten, die je nach Verformungsgrad zur Verfügung stehen. Die gummielastische intramolekulare Verformung des Lagermaterials lässt sich auf die bekannte Federeigenschaft von gummielastischen Materialien zurückführen, die über eine weitmaschige Vernetzung der Molekülgruppen im Innern verfügen. Tatsächlich setzen sich Elastomere, also elastisch verformbare Kunststoffe, überwiegend aus geknäulten Polymerketten zusammen. Die Polymerketten reagieren auf eine Zugbelastung mit einer Streckung bzw. Entflechtung, wobei die Ketten nach Abfall der Zugbelastung wieder in ihren knäulartigen Zustand zurück relaxieren. Umgekehrtes gilt bei einer Druckbelastung.

Als Materialien für das erfindungsgemäß eingesetzte gummielastische Lager empfiehlt die Erfindung den Rückgriff auf in der Technik üblicherweise eingesetzte Elastomere wie Ethylen-Propylenkautschuk (EPDM), SilikonKautschuk (VMQ), Styrol-Butadien-Kautschuk (SBR), Acrylat-Kautschuk (ACM), Naturkautschuk (NR) oder auch Acrylnitril-Butadien-Kautschuk (NBR). Daneben können sogenannte Elastomerlegierungen bzw. Polyblends, also Gemenge von fertigen Polymeren aus mehreren Molekülsorten zum Einsatz kommen. Durch unterschiedliche Mischungsverhältnisse und Zuschlagmittel lassen sich auf diese Weise maßgeschneiderte Werkstoffe und Materialien realisieren, wie beispielsweise Polyolefin-Elastomere aus Polypropylen (PP), Polypropylen mit Talkum oder auch aus Naturgummi (NR). Je nach den eingesetzten Mengenverhältnissen können maßgeschneiderte zweite Federkonstanten eingestellt werden.

In jedem Fall deckt das erfindungsgemäße Lager gleichsam zwei Funktionen ab. Zunächst einmal verhindert es, dass Vibrationen oder allgemein Körperschall vom Motor auf die Basis übertragen wird. Hierfür sorgt im Wesentlichen der Ziehharmonikaabschnitt mit der ersten Federkonstanten. Darüber hinaus fungiert das Lager als gleichsam Endanschlag, und zwar für den Fall, dass der Motor aufgrund von Beschleunigungskräften, beispielsweise beim Zuschlagen der Tür oder bei einem Unfall, definiert abgebremst werden muss. Das besorgt die zweite Federkonstante durch die damit einhergehende intramolekulare Verformung des Lagermaterials.

Es hat sich bewährt, wenn die Anbringung des Motors an der Basis auf mehrere, vorzugsweise drei oder vier Lager zurückgreift. Solche beispielsweise drei Lager für den Motor stellen sicher, dass die hierdurch realisierte Dreipunktlagerung statisch bestimmt ist. Im Übrigen sind die drei Lager größtenteils in einer gemeinsamen Lagerebene angeordnet bzw. spannen eine solche auf.

In diesem Zusammenhang ist erfindungsgemäß vorgesehen, dass das zumindest eine Lager bzw. die mehreren Lager in senkrechter Projektion bzw. in Aufsicht auf die Basis jeweils mit seinem Anschlusskopf bzw. ihren Anschlussköpfen seitlich neben dem Motor angeordnet ist respektive sind. Auf diese Weise kann die Bauhöhe aus Lager und Motor relativ gering eingestellt werden, weil der Anschluss des Lagers bzw. der Lager nicht unterhalb des Motors sondern an seiner Seite erfolgt.

Weil das Lager in der Regel aus einem Elastomer hergestellt wird, kann es grundsätzlich an den Motor bzw. ein Motorgehäuse und/oder die den Motor tragende Basis angespritzt werden. Im Allgemeinen greift die Erfindung jedoch auf ein Lager zurück, welches sich am Motor und/oder der Basis lösbar festlegen lässt. Zu diesem Zweck ist das Lager erfindungsgemäß hohlzylindrisch mit dem bereits angesprochenen Anschlusskopf und gegenüberliegendem Anschlussfuß ausgebildet. Dabei wird die sich konisch vom Anschlussfuß zum Anschlusskopf verjüngende Gestaltung gewählt.

Sowohl der Anschlussfuß als auch der Anschlusskopf des Lagers werden in der Regel in einer zugehörigen Öffnung in einer Halterung am Motor respektive der Basis lösbar aufgenommen. Infolge des hohlzylindrischen Charakters des Lagers kann dieses zugleich als Durchführung für ein oder mehrere Kabel, einen Bowdenzug etc. fungieren, und zwar beispielsweise von der Basis bzw. vom Motor nach außerhalb.

Bei der Basis handelt es sich nicht einschränkend um ein Türinnenblech, ein Motorgehäuse, eine Montageplatte, einen Aggregatträger, einen Türmodulträger etc.. Im Übrigen hat es sich bewährt, wenn der Motor in einer Einformung der Basis aufgenommen wird. Dadurch besteht die Möglichkeit, die Einformung zu verschließen und somit den Motor vollständig zu kapseln. Für diesen Fall fungiert in der Regel ein Verschluss der Einformung als Basis. Das heißt, in diesem Fall nimmt der Verschluss regelmäßig den Anschlussfuß des Lagers auf, wohingegen der Anschlusskopf des Lagers mit dem Motor respektive einem Ausleger oder dergleichen am Motorgehäuse verbunden ist.

Üblicherweise verfügt der Motor bzw. dessen meistens aus Kunststoff gefertigtes Motorgehäuse über einen oder mehrere angeformte Ausleger. Der Ausleger nimmt im Allgemeinen den Anschlusskopf des Lagers lösbar auf. Grundsätzlich kann das Lager an den betreffenden Ausleger natürlich auch angespritzt werden oder in einem Arbeitsgang als 2K-Ausführung hergestellt werden. In einer weiteren Ausführung ist auch eine seitlich am Motorgehäuse angeformte Platte zur Aufnahme des Anschlussfußes denkbar, wobei der Anschlusskopf dann mit z.B. dem Türmodulträger beispielweise über eine Clipsverbindung verbunden wird.

Im Allgemeinen ist das Lager aufgrund des in der Regel realisierten Ziehharmonikaabschnittes und wegen seines hohlzylindrischen Charakters in der Art eines Faltenbalges ausgestaltet. Das heißt, es kann auf unschwer herzustellende Faltenbalge, gegebenenfalls unter Berücksichtigung zusätzlicher Modifikationen, zurückgegriffen werden. Um die schalldämmende Wirkung noch zu erhöhen, hat es sich als günstig erwiesen, wenn die Basis mit einer zusätzlichen schallschluckenden Auskleidung ausgerüstet ist. Meistens wird man die dem Motor zugewandte Innenfläche der Basis schallschluckend auskleiden bzw. mit einer entsprechenden schallschluckenden Innenauskleidung ausrüsten. Als denkbare Materialien haben sich hier Schaumstoff oder vergleichbare poröse Werkstoffe als günstig erwiesen, weil diese zuverlässig etwaigen noch vorhandenen Luftschall dämpfen. Demgegenüber sorgt das erfindungsgemäße Lager hauptsächlich für eine Körperschalldämpfung und Unterbrechung der Körperschallübertragung, so dass insgesamt besondere akustische Vorteile erreicht werden, weil sowohl Körperals auch Luftschall eine wirksame Dämpfung erfahren.

Im Ergebnis wird eine Antriebseinheit für ein Kraftfahrzeug-Aggregat, vorzugsweise für eine Zuzieh-/Öffnungseinrichtung in oder an einem Kraftfahrzeugtürschloss zur Verfügung gestellt. Die Antriebseinheit wird in der Regel im Innern einer Kraftfahrzeugtür platziert, und zwar meistens räumlich getrennt von der Zuzieh-/Öffnungseinrichtung bzw. einem dort im Allgemeinen eingesetzten Hebeltrieb. Für die Verbindung zwischen der externen Antriebseinheit und dem Kraftfahrzeugtürschloss mit der integrierten Zuzieh-/Öffnungseinrichtung bzw. dem angesprochenen Hebeltrieb sorgt im Allgemeinen ein Bowdenzug oder ein anderes flexibles Verbindungsmittel. Dieses überträgt die Motorbewegungen auf den besagten Hebeltrieb im Innern oder an dem Kraftfahrzeugtürschloss.

Eine Beaufschlagung des Motors, um beispielsweise die Zuziehfunktion zu realisieren, führt nun dazu, dass der Motor eine ungewünschte Geräuschquelle darstellt, die überwiegend durch etwaige Vibrationen Körperschall auf die Kraftfahrzeugtür und folglich die Karosserie im Ganzen überträgt. Dieser Körperschall wird erfindungsgemäß durch das spezielle gummielastische Lager zur Festlegung des Motors an der Basis gedämpft. Hierfür zeichnet an erster Stelle die erste Federkonstante des Lagers verantwortlich. Die zweite und demgegenüber größere Federkonstante kommt meistens dann ins Spiel, wenn das Lager als Endanschlag für den Motor, beispielsweise im Crashfall, bei starker Beschleunigung, beim Bremsen, in Kurven oder auf unebener Strecke fungiert. Das ist aus Sicherheitsgründen besonders wünschenswert. Da der Motor mit Hilfe des Lagers eine gleichsam flexible und membranartige Aufhängung erfährt und praktisch nur mit den Lagern räumlich fixiert ist, werden keine Vibrationen auf die Basis übertragen. Die Antriebseinheit ist folglich in sich kräftefrei, zumal der im Beispielfall an den Motor angeschlossene Bowdenzug mit einem eigenen Widerlager ausgerüstet ist. Folglich kann der Motor frei schwingen bzw. vibrieren, wobei seine Vibrationen - wie beschrieben - wirkungsvoll mit Hilfe des beschriebenen gummielastischen Lagers aufgenommen werden.

Gleichzeitig mag das Lager als Membran fungieren, welche den im Allgemeinen im sogenannten Trockenraum befindlichen Motor von einem Nassraum trennt. Im Nassraum kann sich ein Türmodul befinden und ist auch das Kraftfahrzeugtürschloss angeordnet. Dieser Nassraum ist im Allgemeinen der nach außen gerichtete Hohlraum innerhalb der Kraftfahrzeugtür und wird durch ein Türinnenblech oder einen Modulträger in Verbindung mit einer Folie vom sogenannten Trockenraum innerhalb der Kraftfahrzeugtür getrennt. Dieser Trockenraum nimmt im Allgemeinen Sicherheitsaggregate wie einen Seitenairbag oder auch elektrische Komponenten wie Lautsprecher auf.

Das erfindungsgemäße Lager für den Motor sorgt nun nicht nur für eine optimierte Geräuschdämpfung des Motors, sondern stellt aufgrund seines membranartigen Charakters zugleich eine dichtende Verbindung zwischen dem Trockenraum und dem Nassraum her. Denn durch eine an dieser Stelle obligatorische Öffnung wird lediglich der vom Motor beaufschlagte Bowdenzug geführt, welcher im Kraftfahrzeugtürschloss im Nassraum endet. Selbstverständlich sind auch andere Montagemöglichkeiten denkbar und werden von der Erfindung umfasst.

Im Folgenden wird die Erfindung anhand einer lediglich ein Ausführungsbeispiel darstellenden Zeichnung näher erläutert; es zeigen:
- Fig. 1: eine erfindungsgemäße Antriebseinheit für ein Kraftfahrzeug-Aggregat in seiner Ausgestaltung.
- Fig. 2: eine andere Ansicht der Erfindung.

In den Figuren ist eine Antriebseinheit für ein Kraftfahrzeug-Aggregat, vorliegend für eine Zuzieh-/Öffnungseinrichtung 1 dargestellt. Die Zuzieh-/Öffnungseinrichtung 1 ist im Innern eines lediglich angedeuteten KraftfahrzeugtürSchlosses 2 vorgesehen. Wie üblich mag die Zuzieh-/Öffnungseinrichtung 1 mit Hilfe einer Zuziehklinke oder eines anderen Hebels auf eine Drehfalle in dem Kraftfahrzeugtürschloss 2 so arbeiten, dass die Drehfalle von ihrer Vorschließ- stellung bzw. Vorraststellung in eine Hauptschließstellung respektive Hauptraststellung überführt wird. Das ist bekannt und nicht Gegenstand der vorliegenden Erfindung.

Tatsächlich setzt sich die zu beschreibende Antriebseinheit im Wesentlichen aus einem Motor 3 und ferner einem elastischen bzw. gummielastischen Lager 4 zur Festlegung des Motors 3 an einer Basis 5 zusammen. Bei der Basis 5 handelt es sich im Ausführungsbeispiel um ein sogenanntes Türinnenblech 5, welches in der Darstellung einen Nassraum 6 von einem Trockenraum 7 im Innern einer nicht näher dargstellten Kraftfahrzeugtür trennt. Der Nassraum 6 bezeichnet den Bereich im Innern der Kraftfahrzeugtür, in welchen grundsätzlich Feuchtigkeit über einen beispielsweise hier angeordneten Fensterheber eindringen kann und die Kraftfahrzeugtür über Bohrungen auch wieder verlässt. Im Allgemeinen und im Rahmen des Beispiels ist das Kraftfahrzeugtürschloss 2 in dem besagten Nassraum 6 untergebracht.

Hiervon zu unterscheiden ist der Trockenraum 7, weicher den Bereich im Innern der Kraftfahrzeugtür bezeichnet, der üblicherweise mit Hilfe einer Folie oder auch auf andere Art und Weise vom Nassraum 6 getrennt ist und - wie der Name schon sagt - keine Feuchtigkeit im Innern aufweist. In dem Trockenraum 7 sind dementsprechend feuchtigkeitsempfindliche Aggregate wie Lautsprecher, Seitenairbag etc. angeordnet. Des Weiteren findet sich der Motor 3 im Trockenraum 7, und zwar im Bereich einer Durchtrittsöffnung 8 zum Nassraum 6.

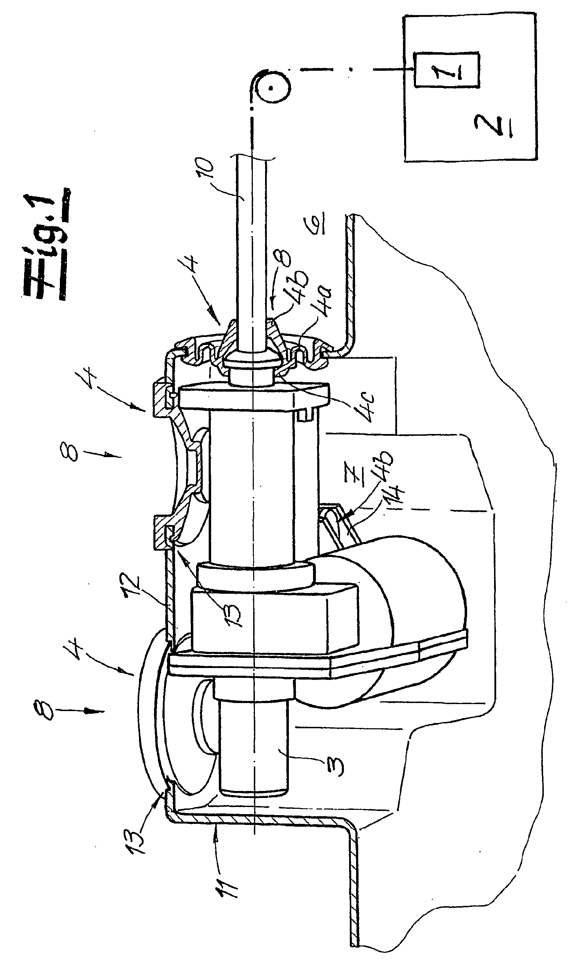

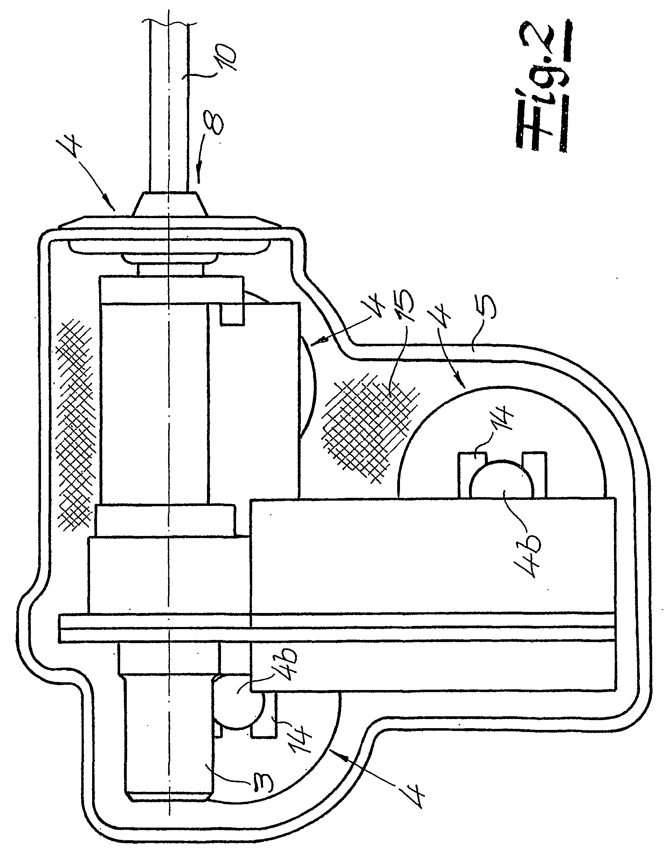

Im Rahmen des Beispiels nach Fig. 1 und 2 sind vier gummielastisches Lager 4 für die Festlegung des Motors 3 an der Basis 5 realisiert.

Sämtlichen Lagern 4 ist gemein, dass sie in Axialrichtung A und/oder Radialrichtung R und je nach Verformungsgrad unterschiedliche Federkonstanten Di und D2 aufweisen. Zu diesem Zweck ist das jeweilige Lager 4 im Axialschnitt und/oder Radialschnitt zumindest teilweise ziehharmonikaartig ausgebildet und verfügt über einen Ziehharmonikaabschnitt 4a. Der Ziehharmonikaabschnitt 4a ist mit einer ersten Federkonstante Di ausgerüstet, welcher zur elastischen sowie strukturellen Verformung des besagten Ziehharmonikaabschnittes 4a korrespondiert bzw. hieraus resultiert. Darüber hinaus verfügt das Lager 4 noch über eine zweite größere Federkonstante D2, welche zur gummielastischen intramolekularen Verformung des Lagermaterials, das heißt des Werkstoffes aus dem das Lager 4 besteht, korrespondiert.

Die gegenüber der ersten Federkonstanten Di größere zweite Federkonstante D2 (D2 > D-i) kommt dann ins Spiel, wenn der Ziehharmonikaabschnitt 4a vollständig gestaucht ist und zusätzlich am Lager 4 angreifende Kräfte nicht mehr zu einer elastischen strukturellen Verformung, das heißt einer Dehnung oder Stauchung korrespondieren, sondern vielmehr intramolekular von dem gummielastischen Lagermaterial als solchen aufgenommen werden. Das ist in der Beschreibungseinleitung bereits im Detail erläutert worden.

Man erkennt, dass die vier Lager 4 entsprechend der Fig. 1 zwei Lagerebenen aufspannen. Zunächst einmal finden sich drei unterhalb bzw. seitlich des Motors bzw. Elektromotors 3 angeordnete Lager 4, die eine gemeinsame Lagerebene definieren. Des Weiteren ist ein viertes Lager 4 senkrecht zu dieser Lagerebene vorgesehen, welches die Durchtrittsöffnung 8 vom Trockenraum 7 zum Nassraum 6 abdichtet.

In jedem Fall verfügt der Motor 3 über eine insgesamt kräftefreie Anbringung und Festlegung an der Basis 5. Denn ein vom Motor 3 ausgehender Bowdenzug 10 im Beispielfall oder ein vergleichbares elastisches Verbindungsmittel verfügt über ein eigenes Widerlager. Dadurch kann der Motor 3 frei im Raum schwingen bzw. sind die mehreren Lager 4 in der Lage, etwaige Vibrationen des Motors 3 wirkungsvoll zu dämpfen. Tatsächlich findet im Speziellen keine Körperschallübertragung vom Motor 3 auf die Basis 5 statt.

Da sich der Motor 3 insgesamt im Trockenraum 7 befindet, weil insofern das am Abtrieb des Motors 3 vorgesehene Lager 4 zugleich als Dichtungsmanschette fungiert, sind Funktionsstörungen des als schnell laufender Gleichstrommotor ausgebildeten Motors 3 praktisch ausgeschlossen. Hinzu kommt, dass das Lager 4 insgesamt hohlzylindrisch ausgestaltet wird und in der Regel aus einem gummielastischen Kunststoff bzw. einem Polymer hergestellt wird, wie er in der Beschreibungseinleitung bereits spezifiziert worden ist. Infolge dieses hohlzylindrischen Charakters kann das Lager 4 zugleich als Durchführung und folglich Dichtungsmanschette für ein Kabel bzw. den Bowdenzug 10 in den Beispielfällen fungieren. Dadurch wird die mechanische Verbindung des Motors 3 vom Trockenraum 7 über den Bowdenzug 10 durch das zugehörige Lager 4 hindurch bis hin zur Zuzieh-/Öffnungseinrichtung 1 im Innern des Kraftfahrzeugtürschlosses 2 gewährleistet.

Wie bereits dargelegt, kann die Basis 5 als Türinnenblech ausgestaltet sein. Es ist aber auch möglich, die Basis 5 an oder in einem Verschluss 12 zu definieren, wie Fig. 1 andeutet. Dieser Verschluss 12 mag dazu dienen, eine

Einformung 11 der Basis 5 zu verschließen. Die Einformung 11 dient in Verbindung mit dem Verschluss 12 dazu, den gesamten Motor 3 einzuhausen und wird im Rahmen der Fig. 1 im Türinnenblech definiert.

Eine solche Vorgehensweise empfiehlt sich aus Sicherheitsgründen. Denn insbesondere im Falle eines Seitenaufpralls wirken auf den besagten Motor 3 erhebliche Querbeschleunigungskräfte. Diese werden einerseits von dem den Motor 3 einhausenden Gehäuse aufgenommen und andererseits von dem Lager 4 bzw. den mehreren Lagern 4. Denn in einem solchen Fall wird der jeweilige Ziehharmonikaabschnitt 4a vollständig gestaucht und fährt das Lager 4 gleichsam "auf Block", so dass dann die größere Federkonstante D2 primär relevant wird. Tatsächlich setzt die große Federkonstante D2 etwaigen Verformungen erhebliche Gegenkräfte entgegen, wenn das Lager 4 gleichsam als Endanschlag bei derartigen Fahrdynamiksituationen fungiert.

Insgesamt kann das Lager 4 lösbar mit dem Motor 3 gekoppelt werden. Zu diesem Zweck mag das Lager 4 Schlitzeinformungen 13 aufweisen, die mit hierin eintauchenden Stegen der Basis 5 oder des Verschlusses 12 zur Halterung des Lagers 4 in der zugehörigen Durchtrittsöffnung 8 wechselwirken. Im gezeigten Beispiel sind die Schlitzeinformungen 13 als Radialnuten im Fußbereich des Lagers 4 realisiert. Daneben ist es selbstverständlich oder alternativ möglich, das Lager 4 an den Motor 3 und/oder die Basis 5 und/oder den Verschluss 12 anzuspritzen. Denn üblicherweise verfügt der Motor 3 über ein Kunststoffgehäuse bzw. ist die Basis 5 ganz oder teilweise aus Kunststoff oder Metall gefertigt. Jedenfalls lassen sich in der Regel Elastomere, die als Werkstoff für das Lager 4 zur Verfügung stehen, mit derartigen Werkstoffen (Kunststoff, Stahl) unschwer durch einen Spritzvorgang verbinden.

Besonders bevorzugt ist es jedoch, wenn das Lager 4 lösbar mit der Basis 5 respektive dem Verschluss 12 gekoppelt ist, wie dies für beide Ausgestaltungen nach den Fig. 1 und 2 gilt. Dabei verfügt das Lager 4 einen Anschlusskopf 4b und einen Anschlussfuß 4c. Anhand der Schnittdarstellung in Fig. 1 erkennt man, dass das Lager 4 sich konisch verjüngend vom Anschlussfuß 4c zum Anschlusskopf 4b ausgestaltet ist. Dadurch wird gewährleistet, dass das Lager 4 bei den auftretenden maximalen Querbeschleunigungen im Crashfall und im Zuge seiner Stauchung nicht nur ziehharmonikaartig ineinander geschoben wird, sondern hierbei die einzelnen Bereiche des Ziehharmonikaabschnittes 4a konzentrisch ineinander geschoben werden, so dass sich der jeweilige Lagerungspunkt des Motors 3 hierbei nicht verändert.

Man erkennt, dass die Lager 4 zum Teil in einem Ausleger 14 aufgenommen werden, und zwar regelmäßig mit ihrem Anschlusskopf 4b. Der Ausleger 14 mag an dem Motor einstückig angeschlossen sein bzw. ein zugehöriges Motorgehäuse und verfügt über eine an den Anschlusskopf 4b angepasste Öffnung. Außerdem wird deutlich, dass das jeweilige Lager 4 (der drei Lager 4 seitlich bzw. unterhalb des Motors 3) in senkrechter Projektion bzw. Aufsicht auf die Basis 5 mit seinem Anschlusskopf 4b seitlich neben dem Motor 3 angeordnet ist. Dadurch wird eine besonders raumsparende und kompakte Anbringung des Motors 3 gewährleistet.

In jedem Fall ist das Lager 4 jeweils in der Art eines Faltenbalges ausgestaltet und verfügt über die bereits angesprochenen Falten, die sich infolge des konischen Charakters bei einer Stauchung des Lagers 4 konzentrisch ineinander schieben. Das Umgekehrte gilt dann, wenn das Lager 4 gedehnt wird. Das Lager 4 dient primär dazu, etwaigen und vom Motor 3 resultierenden Körperschall zu dämpfen. Zusätzlich entstehender Luftschall kann nun noch mit Hilfe einer schallschluckenden Innenauskleidung 15 eine Dämpfung erfahren. Diese schallschluckende Innenauskleidung 15 mag als Schaumstoffschicht oder andere poröse Beschichtung auf der Basis 5 angebracht werden, und zwar auf der dem Motor 3 zugewandten Innenfläche. Das deutet die Fig. 2 prinzipiell an.

## Patentansprüche

1. Antriebseinheit für ein Kraftfahrzeug-Aggregat, insbesondere ein Kraftfahrzeugtür-Aggregat, vorzugsweise für eine Zuzieh-/Öffnungseinrichtung (1) in oder an einem Kraftfahrzeugtürschloss (2), mit wenigstens einem Motor (3) und zumindest einem gummielastischen Lager (4) zur Festlegung des Motors (3) an einer Basis (5), wobei
- das Lager (4) im Axialschnitt und/oder Radialschnitt zumindest teilweise ziehharmonikaartig ausgebildet ist und in Axialrichtung (A) und/oder Radialrichtung (R) unterschiedliche Federkonstanten (D₁, D₂) aufweist,
**dadurch gekennzeichnet, dass**
- das Lager (4) hohlzylindrisch sowie sich konisch verjüngend vom Anschlussfuß (4c) zum Anschlusskopf (4b) ausgebildet ist, wobei
- das Lager (4) in senkrechter Projektion auf die Basis (5) mit seinem Anschlusskopf (4b) seitlich neben dem Motor (3) angeordnet ist.

2. Antriebseinheit nach Anspruch 1 , **dadurch gekennzeichnet, dass** das Lager (4) eine erste Federkonstante (D₁) zur elastischen strukturellen Verformung eines Ziehharmonikaabschnittes (4a) und eine zweite größere Federkonstante (D2) zur gummielastischen intramolekularen Verformung des Lagermaterials korrespondiert.

3. Antriebseinheit nach Anspruch 1 oder 2, **dadurch gekennzeichnet, dass** mehrere, vorzugsweise drei oder vier, Lager (4) vorgesehen sind, die größtenteils eine gemeinsame Lagerebene aufspannen.

4. Antriebseinheit nach einem der Ansprüche 1 bis 3, **dadurch gekennzeichnet, dass** das Lager aus einem Elastomer, beispielsweise PP oder NR, hergestellt ist.

5. Antriebseinheit nach einem der Ansprüche 1 bis 4, **dadurch gekennzeichnet, dass** das Lager (4) zugleich als Durchführung für ein Kabel, einen Bowdenzug (10) etc. vom Motor (3) nach außen ausgebildet ist.

6. Antriebseinheit nach einem der Ansprüche 1 bis 5, **dadurch gekennzeichnet, dass** die Basis (5) als Türinnenblech, Motorgehäuse, Montageplatte, Aggregatträger, Modulträger etc. ausgebildet ist.

7. Antriebseinheit nach einem der Ansprüche 1 bis 6, **dadurch gekennzeichnet, dass** der Motor (3) in einer Einformung (11) der Basis (5) aufgenommen wird.

8. Antriebseinheit nach Anspruch 7, **dadurch gekennzeichnet, dass** ein Verschluss (12) der Einformung (11) als Basis (5) fungiert.

9. Antriebseinheit nach einem der Ansprüche 1 bis 8, **dadurch gekennzeichnet, dass** das Lager (4) in einer Öffnung, insbesondere Durchtrittsöffnung (8), der Basis (5) aufgenommen wird oder an diese angespritzt ist.

10. Antriebseinheit nach einem der Ansprüche 1 bis 9, **dadurch gekennzeichnet, dass** das Lager (4) in einem Ausleger (14) am Motor (3) gehaltert wird oder an diesen angespritzt ist.

11. Antriebseinheit nach einem der Ansprüche 1 bis 10, **dadurch gekennzeichnet, dass** das Lager (4) in der Art eines Faltenbalges ausgestaltet ist.

12. Antriebseinheit nach einem der Ansprüche 1 bis 11, **dadurch gekennzeichnet, dass** die Basis (5) eine dem Motor (3) zugewandte schallschluckende Innenauskleidung (15) aufweist.

## Claims

1. Drive unit for a motor vehicle assembly, particularly a motor vehicle door assembly, preferably for a closing / opening device (1) in or on a motor vehicle door lock (2), having at least one motor (3) and at least one rubber-elastic bearing (4) for attaching the motor (3) to a base (5), wherein
- the bearing (4) has an concertina-like construction in the axial section and / or the radial section and has different spring constants (D1, D2) in the axial direction (A) and the radial direction (R),
**characterized in that**
- the bearing (4) is constructed as a hollow cylinder and tapers conically from the connection foot (4c) toward the connection head (4b), wherein
- the bearing (4) is arranged such that its connection head (4b) is positioned laterally beside the motor (3) in the vertical projection on the base (5).

2. Drive unit according to claim 1, **characterized in that** the bearing (4) has a first spring constant (D1) for elastic, structural deformation of a concertina section (4a), and a second, greater spring constant (D2) corresponds to the rubber-elastic intramolecular deformation of the bearing material.

3. Drive unit according to either of claims 1 or 2, **characterized in that** several, preferably three or four bearings (4) are provided, which extend largely over a common bearing plane.

4. Drive unit according to any one of claims 1 to 3, **characterized in that** the bearing is made from an elastomer, for example PP or NR.

5. Drive unit according to any one of claims 1 to 4, **characterized in that** the bearing (4) is constructed to serve simultaneously as a pass-through for a cable, a Bowden cable (10) or the like, from the motor (3) to the outside.

6. Drive unit according to any one of claims 1 to 5, **characterized in that** the base (5) is constructed as an interior door panel, motor housing, mounting plate, assembly carrier, module carrier or similar.

7. Drive unit according to any one of claims 1 to 6, **characterized in that** the motor (3) is accommodated in an indentation (11) in the base (5).

8. Drive unit according to claim 7, **characterized in that** a closure (12) of the indentation (11) functions as base (5).

9. Drive unit according to any one of claims 1 to 8, **characterized in that** the bearing (4) is accommodated in an opening, particularly a passthrough opening (8) in the base (5) or is moulded onto it.

10. Drive unit according to any one of claims 1 to 9, **characterized in that** the bearing (4) is retained on the motor (3) in a cantilever (14) support or is moulded onto it.

11. Drive unit according to any one of claims 1 to 10, **characterized in that** the bearing (4) is constructed in the manner of a bellows.

12. Drive unit according to any one of claims 1 to 11, **characterized in that** the base (5) has a sound-absorbing inner lining (15) facing the motor (3).

## Revendications

1. Unité d'entraînement pour un groupe de véhicule automobile, en particulier un groupe de portière de véhicule automobile, de préférence pour un dispositif d'ouverture par traction (1) dans ou sur une serrure de portière de véhicule automobile (2), avec au moins un moteur (3) et au moins un support élastique en caoutchouc (4) pour fixer le moteur (3) sur une base (5),
- le support (4) étant constitué dans la coupe axiale et/ou radiale au moins en partie de type en accordéon et comportant dans la direction axiale (A) et/ou radiale (R) des constantes d'élasticité (D1, D2),
**caractérisée en ce que**
- le support (4) est constitué de manière cylindrique creuse ainsi que se réduisant de façon conique du pied de raccordement (4c) à la tête de raccordement (4b),
- le support (4) étant disposé en projection verticale sur la base (5) avec sa tête de raccordement (4b) latéralement près du moteur (3).

2. Unité d'entraînement selon la revendication 1 **caractérisée en ce que** le support (4) répond à une première constante d'élasticité (D1) pour la déformation élastique structurelle d'une section en accordéon (4a) et à une deuxième constante d'élasticité plus grande (D2) à une déformation élastique du caoutchouc intramoléculaire du matériau du support.

3. Unité d'entraînement selon la revendication 1 ou 2 **caractérisée en ce que** plusieurs, de préférence trois ou quatre, supports (4) sont prévus qui fixent en grande partie un plan d'appui commun.

4. Unité d'entraînement selon l'une quelconque des revendications 1 à 3 **caractérisée en ce que** le support est fabriqué à partir d'un élastomère, par exemple PP ou NR.

5. Unité d'entraînement selon l'une quelconque des revendications 1 à 4 **caractérisée en ce que** le support (4) est constitué simultanément comme un passage pour un câble, un câble Bowden (10) etc, du moteur (3) vers l'extérieur.

6. Unité d'entraînement selon l'une quelconque des revendications 1 à 5 **caractérisée en ce que** la base (5) est constituée comme une tôle intérieure de portière, un carter moteur, une plaque de montage, un support de groupe, un support de module etc.

7. Unité d'entraînement selon l'une quelconque des revendications 1 à 6 **caractérisée en ce que** le moteur (3) est logé dans un élément moulé (11) de la base (5).

8. Unité d'entraînement selon la revendication 7 **caractérisée en ce qu'**une fermeture (12) de l'élément moulé (11) fonctionne comme base (5).

9. Unité d'entraînement selon l'une quelconque des revendications 1 à 8 **caractérisée en ce que** le support (4) est logé dans une ouverture, en particulier une ouverture de passage (8), de la base (5) ou est injecté sur celle-ci.

10. Unité d'entraînement selon l'une quelconque des revendications 1 à 9 **caractérisée en ce que** le support (4) est retenu dans un bras de support (14) sur le moteur (3) ou est injecté sur celui-ci.

11. Unité d'entraînement selon l'une quelconque des revendications 1 à 10 **caractérisée en ce que** le support (4) est configuré sous la forme d'un soufflet.

12. Unité d'entraînement selon l'une quelconque des revendications 1 à 11 **caractérisée en ce que** la base (5) comporte un revêtement intérieur (15) absorbant les sons, tourné vers le moteur (3).
